# EUROPEAN PATENT SPECIFICATION

(11) **EP 0 302 738 B1**
(45) Date of publication and mention of the grant of the patent: **22.06.1994**
(21) Application number: 88307247.2
(22) Date of filing: 05.08.1988
(51) Int. Cl.: C07F 7/22, C03C 17/25, C09D 5/24, H01B 1/08

(54) **Stannic acid anhydride**
Zinnsäureanhydride
Anhydrides de l'acide stannique

(30) Priority: 05.08.1987 JP 197030/87; 05.08.1987 JP 197031/87; 07.08.1987 JP 198948/87; 07.08.1987 JP 198949/87; 07.08.1987 JP 198950/87
(43) Date of publication of application: 08.02.1989
(73) Proprietor: JAPAN EXLAN COMPANY, LTD., Osaka-shi Osaka 530 (JP)
(72) Inventor: Kobashi, Toshiyuki, Tsukubo-gun Okayama-ken (JP); Naka, Hideo, Okayama-shi (JP)
(74) Representative: Geering, Keith Edwin

(56) References cited:
- EP-A- 0 235 968
- SU-A- 541 849
- US-A- 3 853 612
- CHEMICAL EXTRACTS vol. 105, no. 20, 17 November 1986, abtsract no. 175228u, Columbus, Ohio, US; & JP-A-6184380(KOKAI TOKKYO KOHO) 28.04.1986
- CHEMICAL ABSTRACTS vol. 99, no. 20, 14 November 1983, abstracts no. 160791f, Columbus, Ohio, US; & SU-A-103683 (V.P. KARLOV et al.) 07.08.1983

## Description

The present invention relates to stannic acid anhydrides suitable for forming transparent conductive tin oxide, and to conductive products comprising such tin oxide, and to their formation.

In recent years, with the remarkable development in the field of electro-optical elements, attention has been paid to transparent conductive films of SnO₂ or In₂O₃. These have been developed, for example, as transparent electrodes of various optical devices such as those of electro-luminescent, liquid crystal and image accumulation devices, etc.; as heating elements or resistors utilizing their heat resistance and anti-abrasion properties; as solar cells utilizing their high conductivity; or as selective permeable films for use in solar heat electricity generation utilizing their high reflexibility in the infrared.

Known methods of forming these transparent conductive films are :
(1) chemical vapor deposition;
(2) vacuum evaporation;
(3) sputtering;
(4) coating.

There is also a strong demand for conductive powder to give conductivity to paints, plastics, fibers, etc., and in Japanese Patent Kokai (Laid-open) No.77623/1986, a method is proposed in which titanium oxide-tin oxide type composite conductive powder is produced by mixing prescribed quantities of stannous oxalate and antimony chloride with titanium oxide and baking the mixture.

All of the above-mentioned methods (1)-(3) use complicated apparatus and are inferior in operability. In addition, they usually necessitate an etching step after film formation, to form a pattern.

In method (4), when using an inorganic salt such as SnCl₄ for example, hydrogen chloride or other chloride gases are generated upon heat decomposition and severe corrosion of the apparatus takes place. Also, the chlorine remaining in the film may impair the conductivity. There are also methods using organic acid salts such as octyl acid tin salt or an organic complex, but these methods have problems - e.g. the uniformity of the film is impaired upon heat decomposition or gelation of the coating liquid takes place; moreover, they have defects such that the formed film is uneven, cloudy and is liable to damage.

By this method of the above-mentioned Japanese Patent Kokai, it is impossible to cover the surface of the titanium oxide with tin oxide, so that the conductivity is insufficient and the performance shows great fluctuation. SU-A-541849 discloses producing 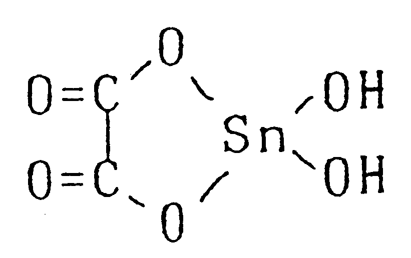
by reacting equimolar quantities of tin (II) oxalate and hydrogen peroxide. Tin oxide obtainable therefrom is of low electrical conductivity.

The present invention provides stannic acid anhydrides of formula: 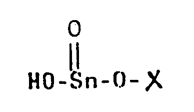
wherein X represents 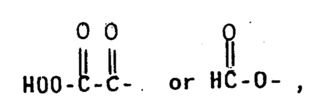
and conductive products covered with tin oxide obtainable by baking a substrate coated or impregnated with such stannic acid anhydride; instead, the dry product can be baked as it is, without such coating or impregnation.

As carboxylates used in making compounds according to the present invention (by reaction with peroxide) may be mentioned for example, stannous formate, stannous acetate, stannous oxalate, stannous tartrate, etc.

Stannous oxalate is preferred.

As the peroxide, any may be used which can form a transparent aqueous solution of a tin compound by reacting with the tin carboxylate. For example there may be mentioned H₂O₂; alkali metal peroxides such as Li₂O₂, Na₂O₂, K₂O₂, Rb₂O₂, Cs₂O₂, etc.; salts of alkali-metals or ammonium of peroxoacids such as HNO₄, H₃PO₅, H₄P₂O₈, H₂SO₅, H₂S₂O₈, etc.; hydroperoxides such as t-butylhydroperoxide, dimethylbenzylhydroperoxide, etc.; peroxides such as di(3-carboxypropanoyl)peroxide, sec-butanoyl-t-butylperoxide, acetyl t-butylperoxide, etc. Incidentally, when using alkali metal peroxides or salts of peroxoacids, remaining alkali metal may impair the conductivity, so that H₂O₂ and organic peroxides such as hydroperoxides and peroxides are preferred.

There is no restriction as to the quantity of peroxide provided that it forms a transparent aqueous solution of the tin compound by reacting with a tin carboxylate. For example, when using H₂O₂ as the peroxide and the quantity is set at more than 1.5 mol, preferably in the range of 1.6 to 2.2 mol, for 1 mol of said tin salt, it is possible to further elevate the uniformity and conductivity of the finally obtained tin oxide coat.

As the aqueous medium, water is usually used, but an amount of water-miscible organic solvent may be used as well in a range in which viscosity rise or gelation of the reaction-produced solution does not occur.

A method of producing the aqueous solution is to add tin carboxylate to an aqueous medium with stirring, and then add a prescribed quantity of hydrogen peroxide.

For increased conductivity, the tin oxide product is preferably doped. Thus dopant may coexist in the reaction system, e.g. in the ratio of 0.01 to 0.6 mol, preferably 0.03 to 0.5 mol, for one mol of the tin carboxylate. Among such dopants may be mentioned compounds containing elements of Ib Group such as Cu, Ag, Au; those of IIb Group such as Cd; those of IIIa Group such as Ce, Eu; those of Va Group such as V, Nb, Ta; those of Vb Group such as As, Sb, Bi; those of VIa Group such as Cr, Mo, W; those of VIIa Group such as Re; those of VIII Group such as Ru , Rh, Pd, Os, Ir, Pt and fluorine. Compounds containing elements selected from Ib, Va, Vb, VIa, VIII Groups and fluorine are preferable. Presence of antimony oxides such as Sb₂O₃, Sb₂O₄, Sb₆O₁₃ , etc. or fluorine compounds such as SnF₂ , NH₄F in the reaction system makes it possible to form a uniform reaction-produced transparent aqueous solution and to provide tin oxide having very good conductivity, and so is especially desirable.

Even if the reaction is initiated at room temperature, there are cases where boiling may take place due to reaction heat. Therefore, when the reaction is conducted at a temperature below the boiling point, it is desirable that the concentration of the tin carboxylate should be generally below 20 weight %, preferably below 18 weight %.

In this way, a transparent aqueous solution of the tin compound can be obtained in a reaction time usually from 5 to 50 minutes. The aqueous solution without any treatment, or after suitable concentration, is baked to produce conductive tin oxide; or the solution is coated on or impregnated into the surface of a substrate and is baked to produce a conductive product covered with tin oxide.

The baking conditions employed are generally temperatures from 400°C to 1000°C, preferably from 500°C to 800°C , for 0.5 to 5 hours, preferably for 1 to 3 hours.

Any substrate can be used which can withstand the conditions of baking.

Such substrates include for example oxides such as zinc white, titanium oxide, antimony white, black iron oxide, red iron oxide, red lead, chromium oxide; sulfides such as lithopone, zinc sulfide, cadmium yellow; sulfates such as barium sulfate, gypsum, lead sulfate; carbonates such as barium carbonate, calcium carbonate powder, white lead; hydroxides such as alumina white; chromates such as chrome yellow, zinc yellow, barium chromate; metal powder such as zinc powder, aluminum powder; inorganic powder such as carbon black, glass beads, glass flake, mica, glaze; inorganic fibers such as carbon fiber, alumina fiber, glass fiber, rock wool, asbestos; ceramic shaped bodies such as tile, insulator, yarn guide; and inorganic products of any optional shape such as film, board, porous body, etc.

As regards the quantity of coating or impregnation, there is no restriction as long as conductive products covered with tin oxide can be obtained. For example, when the substrate is an inorganic powder, it is appropriate to regulate the coating or impregnation by the water-soluble reaction product so that the covering quantity of tin dioxide will be generally from 5 to 40% of the weight of the substrate.

When stannous oxalate as tin carboxylate and H₂O₂ as peroxide are reacted in a molar ratio of about 1 : 2 while regulating the temperature below about 50°C, preferably from 5 to 45°C under cooling, it is possible to produce monoperoxalic acid stannic acid anhydride of which X in the structural formula is

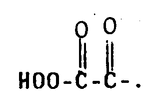

Also, by reacting stannous oxalate with H₂O₂ in a molar ratio of about 1 : 2 at a temperature above about 70°C, preferably between 80° and 100°C, it is possible to produce performic acid stannic acid anhydride, of which X in the structural formula is

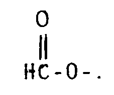

For isolating peroxalic acid stannic acid anhydride, freeze drying is recommended; drying for example above 70°C by-produces a mixture of complicated compounds.

The novel stannic acid anhydride of the present invention makes it possible to form tin oxide of excellent transparency and conductivity, in any optional form such as powder, film or fiber form, without problems of using a complicated apparatus, or inferior operability.

Also, according to the present invention, by baking a substrate coated or impregnated with the water-soluble reaction product, a uniform tin oxide film is formed on the surface of the substrate, and thus a product of excellent conductivity is provided in an industrially advantageous manner, while the shape of the substrate is utilized as it is.

The resulting products are widely applicable not only in fillers, paints, additives for electrostatic recording paper, films, fibers, etc. in which conductivity and electromagnetic wave shielding properties are especially demanded, but also in transparent heating elements, gas sensors, infrared reflexing films, lithium ion selective adsorbing agents, catalysts, flame-retardants, etc.

The present invention is further illustrated by the following Examples.

The bulk density and the resistivity (Ω.cm) were obtained as follows: A sample of 10 g is packed into a cell (inner diameter: 20.5 mm; length: 50 mm); the compressed height h (mm) was measured by an electrode piston (inner diameter: 20 mm; length: 60mm) under a load of 1 t/cm², and the electric resistance R (Ω) was measured using a four-probe ohm meter (3224 type) produced by Hioki Denki Co. Ltd.

### Example 1

To one liter water was added 210 g SnC₂O₄. While regulating the reaction temperature below 40° in an ice bath, 200 g aqueous 35 weight % H₂O₂ solution was added under stirring, and the mixture was reacted for 30 minutes to obtain a transparent aqueous solution (c) of monoperoxalic acid stannic acid anhydride.

This transparent aqueous solution (c) had a very low pH of 0.8, and showed one stage dissociation by potentiometric titration. From this fact, it is apparent that the solution has a structure comparable to sulfuric acid.

About 0.3 ml of the transparent aqueous solution (c) diluted with about 0.3 ml heavy water was measured for ¹³C-NMR. With TMS (tetramethylsilane) used as the external standard, a single sharp line was observed at 161.4 ppm. From this, it is considered that there is an equilibrium condition due to intramolecular rearrangement between the compound (c1) of the present invention and the compound (c2) of the following structure: 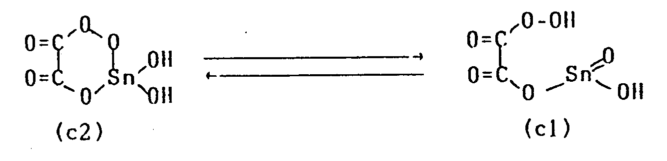
In the same way as above except that 0.1 mol Sb₂O₃ for one mol of SnC₂O₄ was added to the reaction system together with SnC₂O₄, a transparent aqueous solution (d) was obtained.

After the transparent aqueous solutions (c and d) were spray-dried, they were ground with a ball mill into powders of an average particle diameter of about 5 », and the powders were baked in the atmosphere at 500° for 3 hours to produce two kinds of tin oxide powders (C and D).

The resistivity was measured, and the results are shown in Table 1 shown below:

**Table 1**

| Sample name | Bulk density (g/ml) | Resistivity (Ω.cm) |
|---|---|---|
| C | 2.6 | 2 x 10² |
| D | 2.6 | 5 x 10⁻¹ |

### Example 2

Two hundred and ten g (210 g) SnC₂O₄ was added to one liter water, and 200 g aqueous 35 weight % H₂O₂ solution was added under stirring. The mixture was reacted at a temperature of from 95° to 97°C for 30 minutes to obtain a transparent aqueous solution (e) of performic acid stannic acid anhydride. During the reaction, generation of carbon dioxide was observed.

Since the transparent aqueous solution (e) showed a very low pH of 0.8 and showed one stage dissociation by potentiometric titration, it is apparent that the solution has a structure showing a strong acidity comparable to sulfuric acid.

The powder obtained by freeze-drying the transparent aqueous solution (e) was insoluble in water, and this is considered to have resulted from dehydration condensation which occurred during drying.

About 0.3 ml of the transparent aqueous solution (e) diluted with about 0.3 ml heavy water was measured for ¹³C-NMR. With TMS (tetramethylsilane) used as the external standard, a relatively sharp signal and a swelling signal group with a spreading skirt were observed at 162.4 ppm together with a single sharp line at 128 ppm.

From the above-mentioned results, it is considered that performic acid stannic acid anhydride (e1) is generated by the following reaction mechanism, and the compound (c2) also coexists. 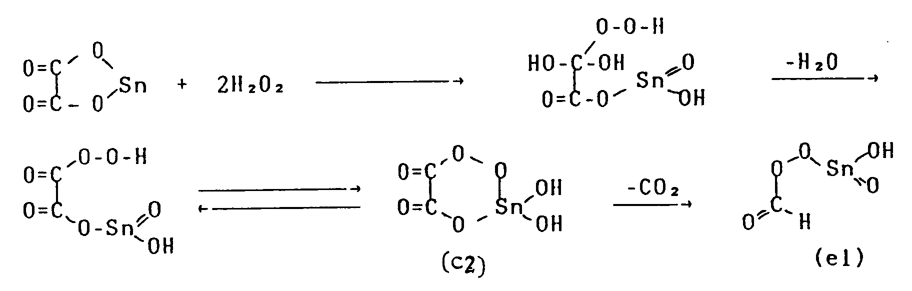
In the same way as above except that 0.1 mol Sb₂O₃ for one mol of SnC₂O₃ was added together with SnC₂O₄, a transparent aqueous solution (f) was obtained.

After the transparent aqueous solutions (e and f) were spray-dried, they were ground with a ball mill into powders of an average particle diameter of about 5 » and the powders were baked in the atmosphere at 500°C for 3 hours to produce two kinds of tin oxide powders (E and F).

The resistivity was measured, and the results are shown in the following Table 2.

**Table 2**

| Sample name | Bulk density (g/ml) | Resistivity (Ω.cm) |
|---|---|---|
| E | 3.4 | 5 x 10¹ |
| F | 3.4 | 7 x 10⁻² |

### Example 3

The transparent aqueous solution (f) of Example 2 was spinner-coated at 3000 rpm on a quartz glass substrate, and was baked in the atmosphere at 700°C for 2 hours to produce a transparent conductive film.

The properties of the film are shown in Table 3.

**Table 3**

| Thickness (Å) | Percent transmission (%) | Resistivity* (Ω.cm) | Surface |
|---|---|---|---|
| 300 | 90 | 6 x 10⁻² | Smooth, uniform |

| | | | |
|---|---|---|---|
| * Resistivity was calculated from the electric resistance by four-probe method and the film thickness. | | | |

### Example 5

SnC₂O₄ was added to room temperature water, and aqueous 35 weight % H₂O₂ solution was added under stirring in the ratio of 2 mols for one mol of SnC₂O₄, and the mixture was reacted for 30 minutes at a temperature of about 95°C generated by reaction heat, to produce a transparent aqueous solution (g) of the reaction product.

A transparent aqueous solution (h) was produced in the same way as above except that 0.1 mol Sb₂O₃ for one mol of SnC₂O₄ was added together with SnC₂O₄. In both cases, the concentration of SnC₂O₄ in the reaction system was set at 15 weight %.

To one weight part aliquots of the thus-produced transparent aqueous solutions (g and h), 4 weight parts of titanium oxide (TA-300, particle diameter 0.3 », produced by Fuji Titan Co.), glass beads (particle diameter 13 », produced by Toshiba Glass Co.), and mica (fine powder of white mica, particle diameter 1») were added respectively. Then, by drying, the water-soluble reaction products were fixed on the surface of substrates. Incidentally, adhesion between the powder particles of the substrate was not observed.

Then the substrates were baked in the atmosphere at 500°C for 3 hours to produce 6 samples to be tested.

The resistivity was measured, and the results are shown in Table 4

**Table 4**

| Sample name | Kind of transparent aqueous solution | Kind of substrate | Resistivity (Ω.cm) |
|---|---|---|---|
| G1 | g | Titanium oxide | 7 x 10⁴ |
| G2 | g | Glass beads | 7 x 10⁴ |
| G3 | g | Mica | 9 x 10⁴ |
| H1 | h | Titanium oxide | 4 x 10⁻¹ |
| H2 | h | Glass beads | 4 x 10⁻¹ |
| H3 | h | Mica | 3 x 10⁻¹ |

From the above Table, it is clearly understood that the products of the present invention, especially those combined with dopant, have excellent conductivity.

### Example 5

Two samples for testing (H4 and H5) were produced in the same way as Example 5 H1 except that glass fiber (diameter 15 »; length 3 mm) and asbestos (Canadian chrysotile No.1) were used as the substrates. The results are shown in Table 5.

**Table 5**

| Sample name | Kind of substrate | Resistivity (Ω.cm) |
|---|---|---|
| H4 | Glass fiber | 3 x 10⁻¹ |
| H5 | Asbestos | 5 x 10⁻¹ |

### Example 6

A sample for testing (H6) was produced in the same way as Example 4 except that the transparent aqueous solution (h) was fixed by spraying onto a tile (unglazed tile, produced by Yodogawa Sangyo Co.).

The surface resistance was measured by a surface resistance tester (MCP tester produced by Mitsubishi Petrochemical Co. Ltd.). The result was 500 Ω/cm².

### Example 7

A sample for testing (H7) was produced in the same way as Example 4 H1 except that t-butyl hydroperoxide was used instead of H₂O₂ and 0.4 mol NH₄F was used instead of Sb₂O₃.

The sample showed an excellent conductivity, with the resistivity being 7x10⁻¹ Ω.cm.

### Example 8

Transparent aqueous solutions (i and j) were produced in the same way as Example 4 except that 1.5 mol di(3-carboxy propanoyl) peroxide was used instead of 2 mol H₂O₂ and except that 0.3 mol NH₄F for one mol of SnC₂O₄ was used, and in the same way as Example 3, tin oxide powders (I and J) were produced.

The resistivity was measured and the results are shown in Table 6.

**Table 6**

| Sample name | Resistivity (Ω.cm) |
|---|---|
| I | 7.4 x 10¹ |
| J | 8.9 x 10⁻² |

The present invention provides novel tin compounds which involve little or no apparatus restrictions or problems, are widely applicable, and can finally form tin oxide of excellent transparency and conductivity in an industrially advantageous manner. The invention can provide products having a uniform tin oxide film on a substrate of any form (such as powder form, film form, fiber form, etc.) to give excellent conductivity.

## Claims

1. Stannic acid anhydride of formula : 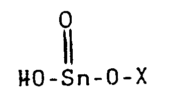 wherein X represents

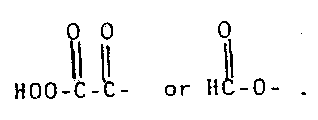

2. A compound according to claim 1 incorporating dopant.

3. A conductive tin oxide product obtainable by baking an anhydride according to claim 1 or 2 or by baking a substrate coated or impregnated with anhydride according to claim 1 or 2.

4. A conductive tin oxide product obtainable by baking a water-soluble product according to claim 1 obtainable by reaction of tin carboxylate with peroxide.

5. A conductive tin oxide product obtainable by baking a substrate coated or impregnated with water-soluble product according to claim 1 obtainable by reaction of tin carboxylate with peroxide.

6. A conductive tin oxide product according to claim 4 or 5 wherein the tin oxide incorporates dopant.

7. A method of making a conductive tin oxide product which comprises forming a solution of compound according to claim 1 in an aqueous medium, and then (a) drying the solution and baking the dried product or (b) coating or impregnating a substrate with the solution and baking the coated or impregnated substrate.

8. A method according to claim 7 wherein dopant for the tin oxide product is included in the aqueous medium.

9. A method of forming a compound according to claim 1 which comprises reacting tin oxalate with peroxide.

## Patentansprüche

1. Zinnsäureanhydrid der Formel: 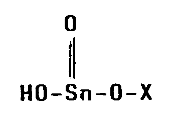 wobei X 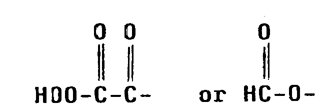 darstellt.

2. Verbindung nach Anspruch 1, wobei ein Dotierungsmittel eingebaut ist.

3. Leitendes Zinnoxidprodukt, erhältlich durch thermische Behandlung eines Anhydrids nach Anspruch 1 oder 2 oder durch thermische Behandlung eines Substrats, das mit dem Anhydrid nach Anspruch 1 oder 2 beschichtet oder imprägniert ist.

4. Leitendes Zinnoxidprodukt, erhältlich durch thermische Behandlung eines wasserlöslichen Produkts nach Anspruch 1, erhältlich durch die Reaktion von Zinncarboxylat mit Peroxid.

5. Leitendes Zinnoxidprodukt, erhältlich durch Backen eines Substrats, das mit dem wasserlöslichen Produkt nach Anspruch 1 beschichtet oder imprägniert ist, welches durch die Reaktion von Zinncarboxylat mit Peroxid erhältlich ist.

6. Leitendes Zinnoxidprodukt nach Anspruch 4 oder 5, wobei dem Zinnoxid ein Dotierungsmittel beigemengt ist.

7. Verfahren zum Herstellen eines leitenden Zinnoxidprodukts, wobei das Verfahren umfaßt:
- Bilden einer Lösung der Verbindung nach Anspruch 1 in einem wässrigen Medium
- und dann (a) Trocknen der Lösung und thermische Behandlung des getrockneten Produkts oder (b) Beschichten oder Imprägnieren eines Substrats mit der Lösung und thermische Behandlung des beschichteten oder imprägnierten Substrats.

8. Verfahren nach Anspruch 7, wobei das Dotierungsmittel für das Zinnoxidprodukt in dem wässrigen Medium enthalten ist.

9. Verfahren zum Bilden einer Verbindung nach Anspruch 1, wobei das Verfahren die Reaktion von Zinnoxalat mit Peroxid umfaßt.

## Revendications

1. Anhydride d'acide stannique, de formule : 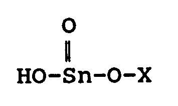 dans laquelle X représente un groupe

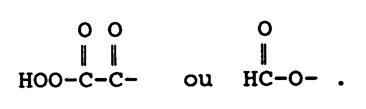

2. Composé suivant la revendication 1, renfermant un dopant.

3. Produit conducteur à base d'oxyde d'étain, pouvant être obtenu par cuisson d'un anhydride suivant la revendication 1 ou 2 ou par cuisson d'un substrat revêtu ou imprégné avec un anhydride suivant la revendication 1 ou 2.

4. Produit conducteur à base d'oxyde d'étain, pouvant être obtenu par cuisson d'un produit hydrosoluble suivant la revendication 1 qui peut être obtenu par réaction du carboxylate d'étain avec un peroxyde.

5. Produit conducteur à base d'oxyde d'étain pouvant être obtenu par cuisson d'un substrat revêtu ou imprégné avec un produit hydrosoluble suivant la revendication 1 qui peut être obtenu par réaction du carboxylate d'étain avec un peroxyde.

6. Produit conducteur à base d'oxyde d'étain suivant la revendication 4 ou 5, dans lequel l'oxyde d'étain renferme un dopant.

7. Procédé de préparation d'un produit conducteur à base d'oxyde d'étain, qui comprend la formation d'une solution d'un composé suivant la revendication 1 dans un milieu aqueux, puis (a) l'élimination de l'eau de la solution et la cuisson du produit sec, ou (b) le revêtement ou l'imprégnation d'un substrat avec la solution et la cuisson du substrat revêtu ou imprégné.

8. Procédé suivant la revendication 7, dans lequel un dopant pour le produit à base d'oxyde d'étain est incorporé au milieu aqueux.

9. Procédé de formation d'un composé suivant la revendication 1, qui comprend la réaction d'oxalate d'étain avec un peroxyde.
